# EUROPEAN PATENT APPLICATION

(11) **EP 3 640 900 A1**
(43) Date of publication of application: **22.04.2020**
(21) Application number: 19192246.7
(22) Date of filing: 19.08.2019
(51) Int. Cl.: G07G 1/00, G07G 1/01, G06Q 20/18, G09F 1/00, G09F 7/00, G09F 15/00

(54) **SALES DATA PROCESSING APPARATUS**

(30) Priority: 15.10.2018 JP 2018193967
(71) Applicant: Toshiba Tec Kabushiki Kaisha, 141-8562 Tokyo (JP)
(72) Inventor: Watanabe, Osamu, Tokyo, 141-8562 (JP)
(74) Representative: Hoffmann Eitle

(57) **Abstract**

A sales data processing apparatus includes a lower box-shaped housing having a lower panel holder at a lower edge thereof, and an upper box-shaped housing having an upper panel holder at an upper edge thereof and stacked on the lower housing so that the upper panel holder and the lower panel holder are aligned to hold a single panel that extends from the upper edge of the upper box-shaped housing to the lower edge of the lower box-shaped housing. One of the lower box-shaped housing and the upper box-shaped housing includes a cash handling apparatus.

## Description

### CROSS-REFERENCE TO RELATED APPLICATIONS

This application is based upon and claims the benefit of priority from Japanese Patent Application No. P2018-193967, filed on October 15, 2018, the entire contents of which are incorporated herein by reference.

### FIELD

An embodiment relates to a sales data processing apparatus.

### BACKGROUND

Conventionally, a sales data processing apparatus is used for collecting information of a commodity and for performing price calculation, settlement or the like of the commodity.
The sales data processing apparatus has become diversified in recent years, and POS (point-of-sale) devices include a POS terminal, self-service register, and semi-self-service register. The POS terminal is operated by a clerk from input of the commodity information to settlement. The self-service register is also called self-service POS, and is used by the customer to perform settlement from input of commodity information by himself/herself. The semi-self-service register is operated by the customer only for the settlement of the price calculated based on the commodity information input by the clerk.

The sales data processing apparatus as described above has conventionally been provided with a structure for displaying advertisements or the like in a wide area such as a back surface portion of a housing. However, the unitization and miniaturization of each functional part are carried out in accordance with the diversification of the POS devices in recent years.
As a result, unlike the prior art, there is no longer a large area.

### SUMMARY OF THE INVENTION

One of the objects of the present invention is to improve prior art techniques and overcome at least some of the prior art problems as for instance above illustrated.

According to a first aspect of the present invention, it is provided a sales data processing apparatus comprising: a lower box-shaped housing having a lower panel holder at a lower edge thereof; and an upper box-shaped housing having an upper panel holder at an upper edge thereof and stacked on the lower housing so that the upper panel holder and the lower panel holder are aligned to hold a single panel that extends from the upper edge of the upper box-shaped housing to the lower edge of the lower box-shaped housing, wherein one of the lower box-shaped housing and the upper box-shaped housing includes a cash handling apparatus.

Optionally, in the sales data processing apparatus according to the first aspect of the invention, the lower panel holder is attachable to and detachable from the lower box-shaped housing and the upper panel holder is attachable to and detachable from the upper box-shaped housing.

Optionally, in the sales data processing apparatus according to the first aspect of the invention, the sales data processing apparatus according to claim 1, wherein the lower panel holder is integrally formed with the lower box-shaped housing and the upper panel holder is integrally formed with the upper box-shaped housing.

Optionally, in the sales data processing apparatus according to the first aspect of the invention, the sales data processing apparatus according to claim 1, wherein the single panel is made of a sheet metal.

Optionally, in the sales data processing apparatus according to the first aspect of the invention, the single panel is made of a metal plate.

Optionally, in the sales data processing apparatus according to the first aspect of the invention, the single panel is made of a colored sheet having different color patterns.

Optionally, in the sales data processing apparatus according to the first aspect of the invention, the single panel is made of ferromagnetic material.

According to a second aspect of the invention, it is provided a sales data processing apparatus comprising: a lower box-shaped housing having a lower mesh holder at a lower edge thereof; and an upper box-shaped housing having an upper mesh holder at an upper edge thereof and stacked on the lower housing so that the upper mesh holder and the lower mesh holder are aligned to hold a mesh that extends from the upper edge of the upper box-shaped housing to the lower edge of the lower box-shaped housing, wherein one of the lower box-shaped housing and the upper box-shaped housing includes a cash handling apparatus.

Optionally, in the sales processing apparatus according to the second aspect of the invention, the mesh includes a portion to which an S-shaped hook for holding equipment, can be hooked.

According to a third aspect of the invention, it is provided a sales data processing apparatus comprising: a lower box-shaped housing having a lower panel holder at a lower edge thereof; an upper box-shaped housing having an upper panel holder at an upper edge thereof and stacked on the lower housing so that the upper panel holder and the lower panel holder face a same side of the sales data processing apparatus; and a panel that is held between the lower panel holder and the upper panel holder and extends from the upper edge of the upper box-shaped housing to the lower edge of the lower box-shaped housing to cover one side of the sales data processing apparatus, wherein one of the lower box-shaped housing and the upper box-shaped housing includes a cash handling apparatus.

Optionally, in the sales data processing apparatus according to the third aspect of the invention, the lower panel holder is attachable to and detachable from the lower box-shaped housing and the upper panel holder is attachable to and detachable from the upper box-shaped housing.

Optionally, in the sales data processing apparatus according to the third aspect of the invention, the lower panel holder is integrally formed with the lower box-shaped housing and the upper panel holder is integrally formed with the upper box-shaped housing.

Optionally, in the sales data processing apparatus according to the third aspect of the invention, the panel is made of a sheet metal.

Optionally, in the sales data processing apparatus according to the third aspect of the invention, the panel is made of a metal plate.

Optionally, in the sales data processing apparatus according to the third aspect of the invention, the panel is made of a colored sheet having different color patterns.

Optionally, in the sales data processing apparatus according to the third aspect of the invention, the panel is made of ferromagnetic material.

Optionally, the sales data processing apparatus according to the third aspect of the invention further comprises a mesh that is held between the lower panel holder and the upper panel holder and extends from the upper edge of the upper box-shaped housing to the lower edge of the lower box-shaped housing.

Optionally, in the sales data processing apparatus according to the third aspect of the invention, the mesh includes a portion to which an S-shaped hook for holding equipment, can be hooked.

Optionally, in the sales data processing apparatus according to the third aspect of the invention, the panel is made of ferromagnetic material.

Optionally, in the sales data processing apparatus according to the third aspect of the invention further comprises a tiltable touchscreen display mounted on an upper surface of the upper box-shaped housing.

### DESCRIPTION OF THE DRAWINGS

FIG. 1A is a perspective view showing the appearance of the sales data processing apparatus according to a first embodiment.
FIG. 1B is a side view showing the appearance of the sales data processing apparatus.
FIG. 2A is a perspective view showing the appearance of the sales data processing apparatus to which a panel is attached.
FIG. 2B is a perspective view showing the appearance of the sales data processing apparatus in which panels are shifted from each other.
FIG. 3 is a perspective view showing an installed state of the sales data processing apparatus, which is a semi-self-service register.
FIG. 4 is a perspective view showing an installed state of the sales data processing apparatus, which is a self-service register.
FIG. 5 is a perspective view showing an installed state of the sales data processing apparatus, which is a face-to-face POS terminal.
FIG. 6 is a perspective view showing an appearance of a sales data processing apparatus according to a second embodiment.
FIG. 7 is a perspective view showing an appearance of a housing and a holding unit of a plurality of units included in a sales data processing apparatus according to a third embodiment.

### DETAILED DESCRIPTION

In general, according to one embodiment, a sales data processing apparatus includes a lower box-shaped housing having a lower panel holder at a lower edge thereof, and an upper box-shaped housing having an upper panel holder at an upper edge thereof and stacked on the lower housing so that the upper panel holder and the lower panel holder are aligned to hold a single panel that extends from the upper edge of the upper box-shaped housing to the lower edge of the lower box-shaped housing. One of the lower box-shaped housing and the upper box-shaped housing includes a cash handling apparatus.

### (first embodiment)

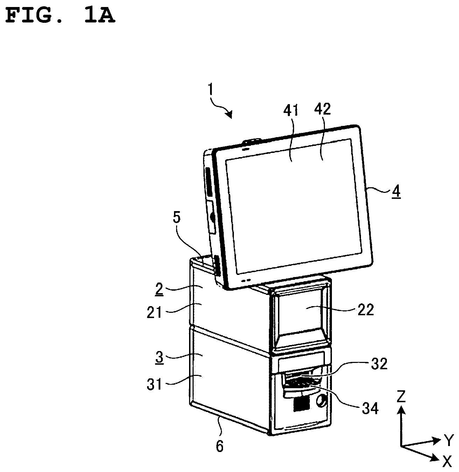

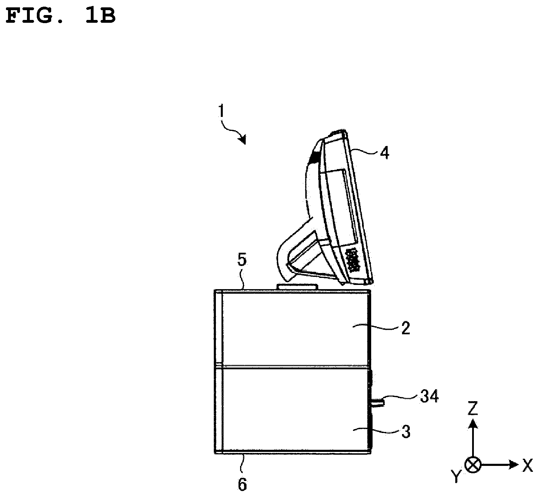

A first embodiment will be described with reference to the drawings. FIG. 1A is a perspective view showing the appearance of a sales data processing apparatus 1 according to a first embodiment. FIG. 1B is a side view showing the appearance of the sales data processing apparatus 1. The sales data processing apparatus 1 according to the present embodiment includes units 2, 3 each having a box shape, which are arranged vertically in an overlapping manner, a display operation unit 4, an upper holding unit 5, and a lower holding unit 6. The vertical direction is the Z-axis direction of the three axes depicted in the figure.

The units 2, 3 are each formed in a box shape and stacked vertically. In the present embodiment, the unit 2 is mounted on the unit 3. The stacked units 2, 3 are fixed to each other with a contact surface (i.e., a lower surface of the housing 21 or 31 and an upper surface of the housing 31) being fixed by screws or the like.

The unit 2 of the present embodiment includes a reading device for reading code information such as a bar code attached to a surface of an article. The reading device includes a light source for irradiating the surface of the article with light, a sensor for receiving light reflected by the article, and the like, at the back of the transparent window 22 provided on the front surface.

The unit 3 of the present embodiment includes a printer that issues a receipt or the like. The printer is provided with a receipt issuing port 32 on the front side of the unit 3. A base 34 supporting the receipt to be issued is projected from below under the receipt issuing port 32. The printer is installed such that it is capable of being pulled out of the housing 31 by providing a slider, a rail, or the like. The operator can pull the printer out of the housing 31 by grasping the base 34 and pulling it in the X-axis direction of the three axes depicted in the drawing after unlocking a lock. The printer is pulled out at the time of replenishment of the paper or replacement or repair of the printer. The lock described above prevents the printer from being unintentionally pulled out from the housing 31. The lock can be released by a predetermined operation by the store clerk.

The display operation unit 4 includes, for example, a display device 41 and a touch panel 42, and accepts an operation by the operator. The display device 41 displays information directed to the operator in accordance with control of a control unit incorporated in the display operation unit 4. The touch panel 42 is provided so as to overlap with the surface layer of the display device 41, and receives an operation on the touch panel 42 from the operator. The display operation unit 4 is fixed to the top surface of the uppermost unit 2 among the plurality of units 2, 3 by screws or the like. The display operation unit 4 is tiltable.

Hereinafter, for convenience of description, the direction in which the display operation unit 4 is facing will be described as a front side of the sales data processing apparatus 1.

The printer which issues the receipt includes a roll paper, a printing portion, and the receipt issuing port 32, and these components are arranged in that order along the depth direction (X-axis direction). The width of a typical receipt is, for example, about 58 mm, while the diameter of a roll paper before use is about 90-100 mm. Therefore, the unit 3 incorporating the printer is likely to have a rectangular parallelepiped shape that is longer in the depth direction. The other unit (i.e., unit 2) is shaped to match the longer unit (i.e., unit 3).
The area of the side surface portion of the stacked units 2, 3 is larger than that of the back surface portion.

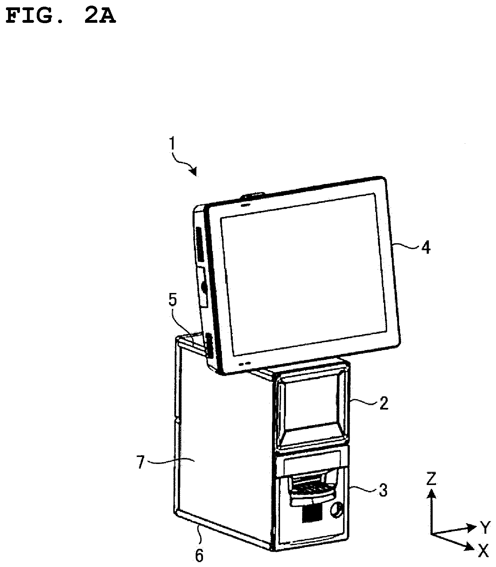

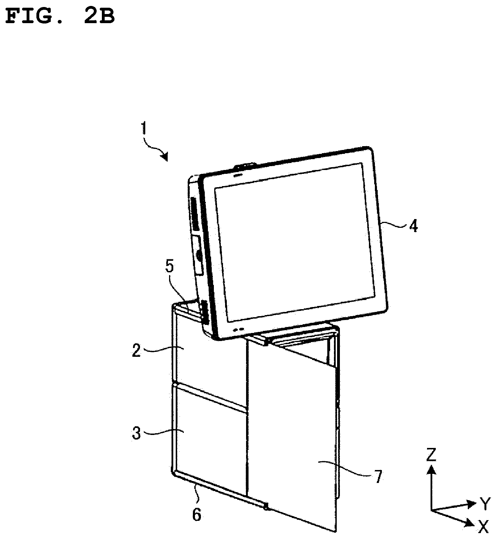

The upper and lower holding units 5, 6 hold the panel 7 therebetween. In one example, an upper panel holder and a lower panel holder are examples of the upper holding unit and lower holding unit, respectively; in another example, a lower mesh holder and an upper mesh holder are examples of the upper holding unit and lower holding unit, respectively. FIG. 2A is a perspective view showing the appearance of the sales data processing apparatus 1 to which the panel 7 is mounted. FIG. 2B is a perspective view showing the appearance of the sales data processing apparatus 1 in which the panel 7 is shifted.

The upper holding unit 5 is provided on at least one of the upper side of the unit 2 installed at the upper stage of the plurality of units 2, 3, and holds the upper side of the panel 7. The lower holding unit 6 is provided at a position opposed to the upper holding unit 5 among the lower side of the unit 3 installed in the lower stage of the plurality of units 2, 3, and holds the lower side of the panel 7.

The upper holding unit 5 of the present embodiment is a rail-shaped member, and is detachably attached to one of the upper sides of the housing 21. Similarly, the lower holding unit 6 is a rail-shaped member, which is detachably attached to a position opposed to the upper holding unit 5 on the lower side of the housing 31.

The panel 7 is, for example, a sheet-like or plate-like member. The plate is mainly flat.
Although it is assumed that the sheet is thin, the panel 7 may have irregularities on the surface thereof.

The panel 7 is, for example, a sheet on which an advertisement is printed (e.g., a transparent sheet on which an advertisement is printed). The transparent sheet may cover the surface of a medium on which the advertisement is displayed, or may sandwich the medium from both sides.

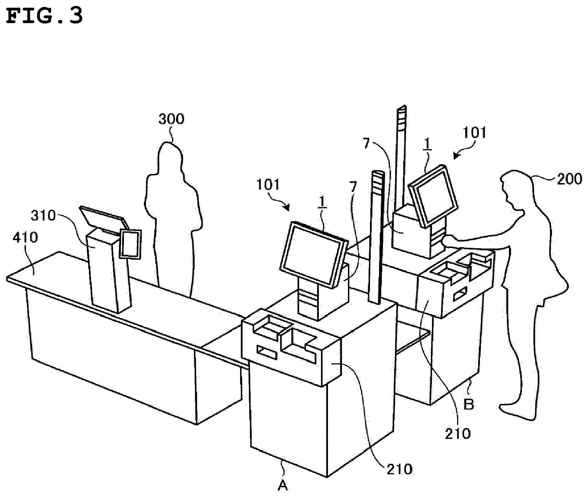

Next, an example of the installed state of the sales data processing apparatus 1 according to the present embodiment will be described with reference to FIGS. 3 ∼ 5.

FIG. 3 is a perspective view showing an installed state of the sales data processing apparatus 1, which is a semi-self-service register 101. The semi-self-service register 101 includes a sales data processing apparatus 1 and a cash handling apparatus 210. The cash handling apparatus 210 includes a bill depositing and dispensing part and a coin depositing and dispensing part, and performs settlement by bills and coins. The semi-self-service register 101 may also be provided with a card reader/writer which performs cashless settlement by electronic money or credit card.

The semi-self-service register 101 is operated by the customer 200, and performs settlement of a purchase price calculated based on commodity information read by the store clerk 300 into the commodity information reading apparatus 310.

As shown in FIG. 3, the semi-self-service register 101 is disposed so as to surround the standing position of the store clerk 300, as long as it is installed in an L-shaped counter 410. That is, the first position A is along the traveling direction of the customer 200 passing through the commodity information reading apparatus 310 and the second position B is at a right angle from the first position A. With this arrangement, the clerk 300 behind the counter 410 can see the customer who operates the semi-self-service register 101, while operating the commodity information reading apparatus 310.

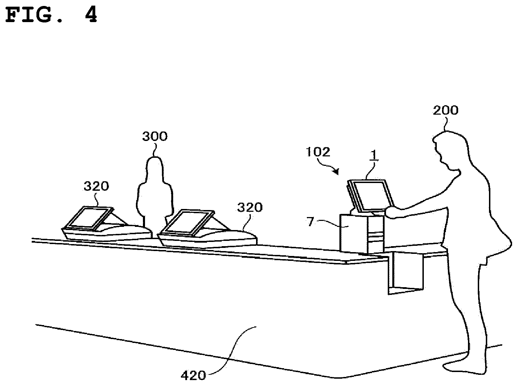

FIG. 4 is a perspective view showing an installed state of the sales data processing apparatus 1, which is a self-service register 102. The self-service register 102 includes a sales data processing apparatus 1 and a card reader/writer for performing cashless settlement by electronic money or credit card.

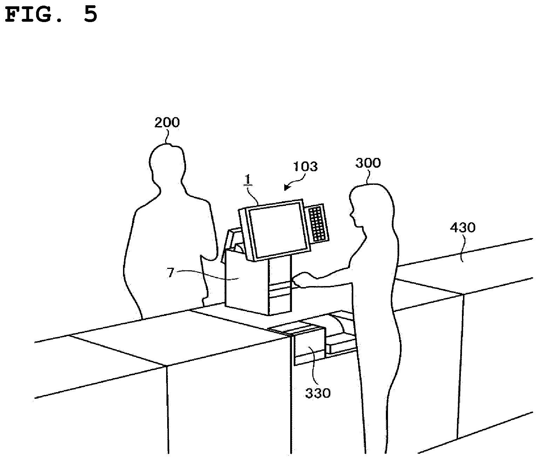

This is an example of an arrangement that is often found in convenience stores and the like. In this example as well, it is assumed that the normal POS terminal 320 is installed in an L-shaped counter 420 which surrounds the upright position of the store clerk 300. The self-service register 102 is a POS terminal on the counter 420.
The position of the self-service register 102 is at a right angle from the arrangement direction of POS terminal 320. With this arrangement, the store clerk 300 behind the counter 420 can see the customer 200 who operates the self-service register 102, while operating the POS terminal 320. FIG. 5 is a perspective view showing an installed state of the sales data processing apparatus 1, which is a face-to-face POS terminal 103.

The face-to-face POS terminal 103 includes a sales data processing apparatus 1 and an accounting apparatus 330. The accounting apparatus 330 is provided with a bill depositing and dispensing part, a coin depositing and dispensing part, and a card reader writer for performing cashless settlement by electronic money or credit card, and performs cash settlement and cashless settlement.

The area of the side surface portion of stacked units 2, 3 is larger than that of the back surface portion as described above. Therefore, in the use of the apparatus illustrated in FIGS. 3 ∼ 5, the side surface portion is more likely to be visible to the customer than the back surface portion of the apparatus. Therefore, the display of the advertisement using the side portions of the stacked units 2, 3 is likely to be more effective relative to the case where the another portion, such as the back portion of the stacked units 2, 3 or the surface of only one of the stacked units 2, 3.

According to the present embodiment, in the sales data processing apparatus configured by combining a plurality of units, it is possible to make a space available for displaying advertisements, for example, larger than a surface included in each unit.
According to the present invention, it is possible to secure an area sufficiently large enough for displaying advertisements, even though it has been difficult to secure an empty wide area for use in advertising or the like as in the prior art, because each functional unit can be replaced and combined with each other in accordance with the diversification of the apparatus in recent years, and because each functional unit has become miniaturized.

### (Modified Example 1)

The panel 7 may be, for example, a colored sheet or the like. As described above, the panel 7 may be a sheet or a plate-like member which is selected from a plurality of types having different color patterns to define an impression of the appearance of the apparatus. According to this, the color pattern of the panel 7 occupying a wide area of the sales data processing apparatus 1 can be easily changed, so that the impression of the apparatus can be easily changed. In this way, the impression in the store can also be changed. In the store with a large number of sales data processing apparatuses 1, it is possible to generate a remarkable effect.

### (Modified Example 2)

The panel 7 may be, for example, a sheet metal made of a material to which a magnet is attached. In this manner, an article such as a fixture can be fixed by use of the magnet.

### (Modified Example 3)

Further, in the present embodiment, a plurality of units are illustrated as two units, but three or more units may be stacked. For example, when a three-tiered unit is provided in the sales data processing apparatus 1, the panel 7 may be present from the uppermost stage to the lowermost stage, or from the uppermost stage to the middle stage, or from the middle stage to the lowermost stage.

### (second embodiment)

A second embodiment will be described with reference to the drawings. Since the present embodiment is a modification of the first embodiment, a detailed description thereof will not be repeated for the parts described in the first embodiment, and the same reference numerals will be used.

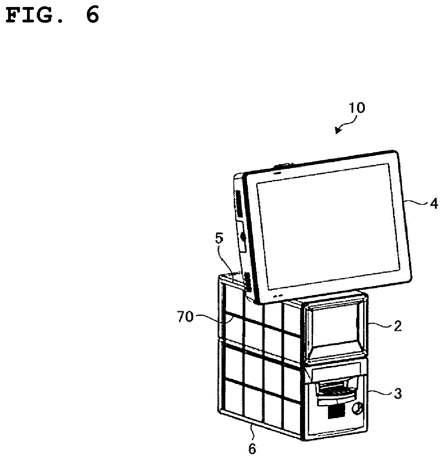

FIG. 6 is a perspective view showing the appearance of a sales data processing apparatus 10 according to the second embodiment. The upper holding unit 5 and the lower holding unit 6 of the sales data processing apparatus 10 according to the present embodiment hold a net-like member 70 therebetween. The net-like member 70 corresponds to the panel 7 in the first embodiment.

The net-like member 70 is composed of a net-like member capable of hooking a hook-shaped member, and can hold an article such as equipment by fixing or hanging. Accordingly, the net-like member 70 enables hanging of the equipment and the like by using, for example, an S-shaped hook.

In this embodiment, the entire panel 7 described in the first embodiment is composed of the net-like member 70, but in the embodiment, a part of the panel 7 described in the first embodiment may be composed of the net-like member 70. For example, a panel 7 may be formed by combining a sheet metal of a material to which a magnet sticks and a net-like member.

### (third embodiment)

A third embodiment will be described with reference to the drawings. Since the present embodiment is a modification of the first embodiment, a detailed description thereof will not be repeated for the parts described in the first embodiment, and the same reference numerals will be used.

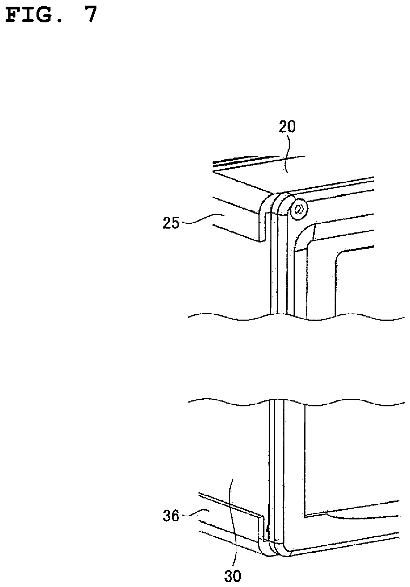

FIG. 7 is a perspective view showing the appearance of housing 20, 30 and holding units 25, 36 of the plurality of units included in a sales data processing apparatus according to the third embodiment. Housing 20, 30 of the present embodiment is formed by extrusion of an aluminum material, and the holding units 35, 36 are integrally provided on the housing 20, 30. This makes it possible to form the housing 20, 30 at a low cost, thereby reducing cost.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention as defined by the appended claims.

## Claims

1. A sales data processing apparatus comprising:
a lower box-shaped housing having a lower panel holder at a lower edge thereof; and
an upper box-shaped housing having an upper panel holder at an upper edge thereof and stacked on the lower housing so that the upper panel holder and the lower panel holder are aligned to hold a single panel that extends from the upper edge of the upper box-shaped housing to the lower edge of the lower box-shaped housing,
wherein one of the lower box-shaped housing and the upper box-shaped housing includes a cash handling apparatus.

2. The sales data processing apparatus according to claim 1, wherein the lower panel holder is attachable to and detachable from the lower box-shaped housing and the upper panel holder is attachable to and detachable from the upper box-shaped housing.

3. The sales data processing apparatus according to claim 1 or 2, wherein the lower panel holder is integrally formed with the lower box-shaped housing and the upper panel holder is integrally formed with the upper box-shaped housing.

4. The sales data processing apparatus according to any of claims 1 to 3, wherein the single panel is made of at least one amongst a sheet metal, a metal plate, a colored sheet having different color patterns, and ferromagnetic material.

5. A sales data processing apparatus comprising:
a lower box-shaped housing having a lower mesh holder at a lower edge thereof; and
an upper box-shaped housing having an upper mesh holder at an upper edge thereof and stacked on the lower housing so that the upper mesh holder and the lower mesh holder are aligned to hold a mesh that extends from the upper edge of the upper box-shaped housing to the lower edge of the lower box-shaped housing,
wherein one of the lower box-shaped housing and the upper box-shaped housing includes a cash handling apparatus.

6. The sales processing apparatus according to claim 5, wherein the mesh includes a portion to which an S-shaped hook for holding equipment, can be hooked.

7. A sales data processing apparatus comprising:
a lower box-shaped housing having a lower panel holder at a lower edge thereof;
an upper box-shaped housing having an upper panel holder at an upper edge thereof and stacked on the lower housing so that the upper panel holder and the lower panel holder face a same side of the sales data processing apparatus; and
a panel that is held between the lower panel holder and the upper panel holder and extends from the upper edge of the upper box-shaped housing to the lower edge of the lower box-shaped housing to cover one side of the sales data processing apparatus,
wherein one of the lower box-shaped housing and the upper box-shaped housing includes a cash handling apparatus.

8. The sales data processing apparatus according to claim 7, wherein the lower panel holder is attachable to and detachable from the lower box-shaped housing and the upper panel holder is attachable to and detachable from the upper box-shaped housing.

9. The sales data processing apparatus according to claim 7 or 8, wherein the lower panel holder is integrally formed with the lower box-shaped housing and the upper panel holder is integrally formed with the upper box-shaped housing.

10. The sales data processing apparatus according to any of claims 7 to 9, wherein the panel is made of at least one amongst a sheet metal, a metal plate, a colored sheet having different color patterns, and ferromagnetic material.

11. The sales processing apparatus according to any of claims 7 to 10, further comprising a mesh that is held between the lower panel holder and the upper panel holder and extends from the upper edge of the upper box-shaped housing to the lower edge of the lower box-shaped housing.

12. The sales processing apparatus according to claim 11, wherein the mesh includes a portion to which an S-shaped hook for holding equipment, can be hooked.

13. The sales processing apparatus according to claim 11 or 12, wherein the panel is made of ferromagnetic material.

14. The sales processing apparatus according to any of claims 7 to 13, further comprising:
a tiltable touchscreen display mounted on an upper surface of the upper box-shaped housing.
